Europäisches Patentamt

European Patent Office

Office européen des brevets

(19)

(11) **EP 1 413 973 A1**

(12) **EUROPEAN PATENT APPLICATION**

(43) Date of publication:
**28.04.2004 Bulletin 2004/18**

(51) Int Cl.$^7$: **G06K 9/62**, G06T 7/40

(21) Application number: **02090360.5**

(22) Date of filing: **22.10.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **Thomson Licensing S.A.
92648 Boulogne Cedex (FR)**

(72) Inventors:
 • **Stauder, Jürgen
  35440 Montreuil sur Ille (FR)**

 • **Vigouroux, Jean-Ronan
  35700 Rennes (FR)**
 • **Gouzien, Gael
  29840 Pospoder (FR)**
 • **Forthofer, Robert
  57450 Theding (FR)**

(74) Representative:
**Hartnack, Wolfgang, Dipl.-Ing. et al
Deutsche Thomson-Brandt GmbH
European Patent Operations
Karl-Wiechert-Allee 74
30625 Hannover (DE)**

(54) **Method and apparatus for automatically calculating confidence values of data classification**

(57)    E.g. in multimedia asset management systems, classification algorithms are used to classify multimedia data into different data classes, for instance such as indoor, landscape and city scenes, to enhance database (MDB) organisation. A problem is the confidence in classification performance. According to the invention, confidence measure values (c) about data classification results are calculated (MMDCL) in addition and can be included in user interaction. The confidence measure values are combined from a first part value ($c_1$) that is related to the confidence in classification and from a second part value ($c_2$) that is related to the confidence in said class models.

**Fig.1**

EP 1 413 973 A1

**Description**

The invention relates to a method and to an apparatus for automatically or electronically calculating confidence measure values for the correctness or reliability of the assignment of data item samples to a related one of different data classes.

Background

In various fields of signal and data processing, e.g. in multimedia asset management (denoted MAM), classification algorithms are used to classify multimedia data - e.g. video and audio data - into a number of different classes or clusters.
For instance, images - e.g. personal photographs - may be classified into classes such as indoor, landscape and city scenes to enhance database organisation.

Invention

A problem of MAM applications based on data classification is the confidence in classification performance. Since users interact with databases via an MAM system, errors in classification are very visible. For example, a user searches for indoor photos with two persons and the system returns outdoor photos or photos with less or more than two persons. To resolve the problem of such classification errors, it is advantageous that e.g. a user interface of an MAM system makes use of confidence measures about data classification results and includes them in user interaction.
A problem to be solved by the invention is to provide confidence measure values for the correctness or reliability of the assignment of data item samples to a related one of different data classes. This problem is solved by the method disclosed in claim 1. An apparatus that utilises this method is disclosed in claim 12. A multimedia asset management system using such apparatus is disclosed in claims 13 and 14. An interactive image or video browsing system using such apparatus is disclosed in claim 15.
Unstructured multimedia data is stored in a multimedia data base. Using a multimedia data classification tool, the data item samples are classified into different classes by calculating confidence measures for the class memberships that indicate the probability of the data items belonging to a specific class. The binary class memberships and the corresponding confidence measures are stored in a meta data base. A multimedia data processing tool exploits the multimedia data and the metadata.
In principle, the inventive method is suited for automatically or electronically calculating confidence measure values for the correctness or reliability of the assignment of each one of multiple data item samples to a related one of different data classes, wherein different class models are determined for at least two different data classes, said method including the following steps:

- calculating for each data item a first confidence measure part value that is related to the confidence in classification and that evaluates the distances between the data class-related content of a current data item and the data classes represented by said different class models;
- calculating, using said class model, for each data item a second confidence measure part value that is related to the confidence in said class models and that evaluates for the data class-related content of said current data item the distribution of data class assignments in the neighbourhood of said current data item;
- forming a confidence measure value from said first and second confidence measure part values;
- assigning to said current data item and its corresponding data class said confidence measure value.

In principle, the inventive apparatus is suited for automatically or electronically calculating confidence measure values for the correctness or reliability of the assignment of each one of multiple data item samples to a related one of different data classes, wherein different class models are determined for at least two different data classes, said apparatus including:

- means for receiving said data item samples;
- means for calculating for each data item a first confidence measure part value that is related to the confidence in classification and that evaluates the distances between the data class-related content of a current data item and the data classes represented by said different class models, said means further calculating, using said class model, for each data item a second confidence measure part value that is related to the confidence in said class models and that evaluates for the data class-related content of said current data item the distribution of data class assignments in the neighbourhood of said current data item, said means forming a confidence measure value from said first and second confidence measure part values and assigning to said current data item and its corresponding data class said confidence measure value;

- means storing a metadata base that includes said data classes and said related confidence measure values for said data items.

Advantageous additional embodiments of the invention are disclosed in the respective dependent claims.

Drawings

Exemplary embodiments of the invention are described with reference to the accompanying drawings, which show in:

Fig. 1    Data classification system using a classification confidence measure according to the invention;
Fig. 2    Geometric constellation of vectors;
Fig. 3    Simplified geometric constellation of vectors.

Exemplary embodiments

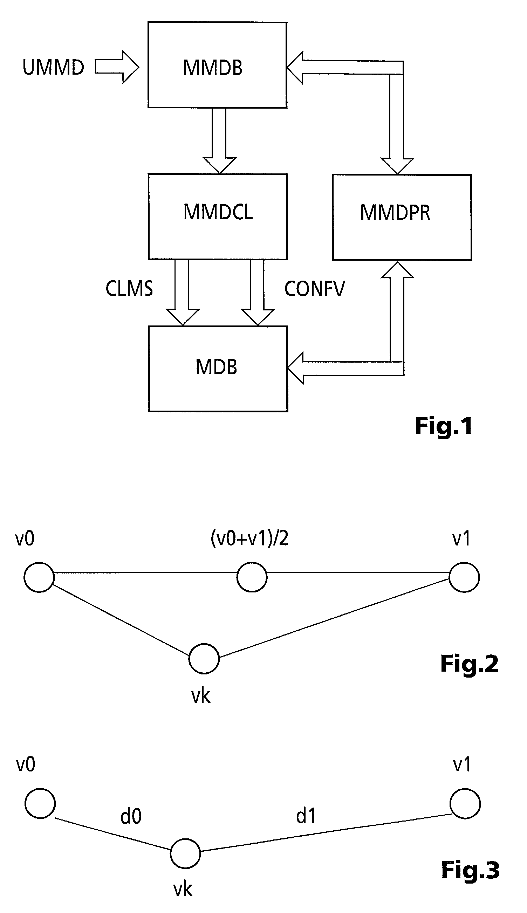

In the data classification system depicted in Fig. 1 unstructured multimedia data items UMMD are fed to a multimedia database MMDB. Data item samples from MMDB are input to a multimedia data classifier MMDCL (a multimedia data classification tool, e.g. a processor and/or a corresponding software), which automatically or electronically classifies the data items into metadata classes and automatically or electronically calculates or evaluates or assigns confidence measure values for corresponding multimedia data items and its determined class. MMDCL outputs the calculated or evaluated or assigned confidence measure values CONFV, or confidence measure information items CONFV, and corresponding class membership information items CLMS. The CONFV data and the CLMS data are stored in a metadata base MDB, e.g. as a look-up table.
While simple classification systems output binary results for class memberships, in the invention additionally confidence measures are calculated for the class memberships which confidence measures indicate the probability of the multimedia data belonging to a specific class. A multimedia data processing means MMDPR, e.g. a processor and/ or a corresponding software, exploits the multimedia data and the metadata. The multimedia data processing means MMDPR process each multimedia data item, or groups of multimedia data items, together with its class memberships and corresponding confidence measures. Such processing can be e.g. displaying, reproducing, retrieving, browsing or editing.
For example, images of indoor scenes could be retrieved in their order of confidence, i.e. the image most probably belonging to the indoor class is displayed first. Another example is to choose representative images for a category using the confidence measures. Confidence measures can also be used to reduce the quantity or number of data retrieval results to the most confident ones.
Advantageously, such confidence measures can also be used for automatic reasoning or assembling of multimedia data sub-classes. For example, in case of metadata items or multimedia data items having high confidence measures for the classes 'outdoor', 'car' as well as 'high motion', the scene could be automatically labelled as 'traffic scene'. MMDPR and/or MMDCL can be controlled by a user interface (not depicted).
The above classification of multimedia data items can be carried out in supervised or unsupervised form. In the first case, the classes are known a-priori or are learned from a learning data set with known class memberships. In the second case, the classes are defined from the actual multimedia data. In both cases, the classes are represented by class models.
For two specific types of class models, confidence measures have already been proposed. For class models using stochastic class membership models, the class membership probability is used as confidence measure. For decision trees, S.K. Murthy has proposed in his Ph.D. thesis titled "On Growing Better Decision Trees from Data", Johns Hopkins University, October 1995, Baltimore, USA, to set the confidence measure to the recall rate of the concerned leaf using the training data set.
The invention concerns MAM systems using class models represented by descriptive or by discriminative class models.
An example of a descriptive class model is just a collection of data items representing the considered class. In the following, such models are called type A models. Such a model $M_{A,q}$ of a class $q$ can be a collection of data vectors $v_i$ according to $M_{A,q} = \{v_i, 0 \le i \le I, v_i \in R^N\}$ where $R^N$ is the data space. The term 'data vector' refers to a data item from the multimedia input data.
To reduce the computational load of classification, less concise models can be used instead. For example, the vectors $v_i$ can be a small number of class representatives computed from a large number of data vectors belonging to the class. Such data vectors are called learning set and the computation of the model $M_{A,q}$ is called learning process.

Another way to less concisely represent classes are discriminative class models. In the following, such models are called type B class models. A well-known method to generate discriminative class models is called Support Vector Machines (SVM). Here, a model $M_{B,q}$ of a class $q$ consists of specific data vectors according to $M_{B,q} = \{v_j, 0 \leq j \leq J, v_j \in R^N\}$ where the vectors $v_j$ define the limits of the sub-space of $R^N$ belonging to the class. This sub-space can be open or closed.

According to the invention, a confidence measure c for the correctness or reliability of the classification of a particular data vector $v_k$ is evaluated. This confidence measure is based on the class models, assuming that the class models represent the classes to a certain extent. The inventive confidence measure c evaluates the relationship between the data vector $v_k$ and the class models, and includes two parts according to

$$c = \alpha \, \varepsilon \, c_1 + (1 - \alpha) \, \chi \, c_2 + \beta \tag{1}$$

where $0 < \alpha < 1$, $\varepsilon$ and $\chi$ are weighting factors and $\beta$ is an offset value. For example, the weighting factors $\varepsilon$ and $\chi$ can be set to 1.0, the weighting factor $\alpha$ to 0.5 and the offset value $\beta$ to zero. Other weighting factors and another offset can be chosen to adapt the confidence measure to an application. The first part $c_1$ expresses the confidence in classification and the second part $c_2$ expresses the confidence in the class models.

*First part $c_1$ of confidence measure*

The first confidence measure $c_1$ expresses the confidence in classification of a particular data vector $v_k$ given the class models. A key for this measure is the distance between $v_k$ and the class subspaces defined by the class models. Two implementation examples are given here:

In a first example implementation, $c_1$ is adapted to class models of type A. Assuming that two classes $q=0$ and $q=1$ exist, without loss of generality it can be supposed that the vector $v_k$ belongs to class $q=0$. The calculation of $c_1$ includes the following steps:

1) A vector $v_0 \in M_{A,0}$ of smallest distance to $v_k$ is chosen. The distance between a vector $v_i \in M_{A,0}$ and $v_k$ can be calculated for example by

$$d = \sum_{n=0}^{N-1} \left( v_{i,n} - v_{k,n} \right)^2 .$$

2) A vector $v_1 \in M_{A,1}$ of smallest distance to $v_k$ is chosen.
3) The confidence measure $c_1$ is calculated according to

$$c_1 = \frac{\left| v_k - \dfrac{v_0 + v_1}{2} \right|}{\left| v_0 - v_1 \right|} \tag{2}$$

This confidence measure is illustrated in Fig. 2 for equation (2). The measure puts the distance of the vector $v_k$ to the neutral point between the class $q=0$ and $q=1$ into relation with the distance between classes $0$ and $1$. The measure $c_1$ can be interpreted as the class membership probability of $v_k$ for its class $q=0$ where $v_k$ is supposed to be superimposed by noise with a symmetric cone-like probability density function.
Other density probability distributions such as Gaussian or Laplacian are possible.

In Fig. 3, a simplified geometric constellation of vectors for equation (2) is used, such that equation (2) can be simplified to

$$c_1 = \frac{\left| \dfrac{1}{2}(d_0 + d_1) - d_0 \right|}{\dfrac{1}{2}(d_0 + d_1)} = \frac{\left| d_1 - d_0 \right|}{d_1 + d_0} \tag{3}$$

with $d_q = |v_k - v_q|$, $q = 0,1$ . The distance of $v_k$ to the class members $v_0$ and $v_1$ is measured on the piecewise linear curve $v_0 v_k v_1$ in a way that equation (3) is simpler than equation (2), and that equation (3) does not require an a-priori classification because the indices 0 and 1 can be exchanged without changing the formula.

A second example implementation of $c_1$ is adapted to class models of type B. Assuming that two classes $q=0$ and $q=1$ exists, the calculation of $c_1$ includes the following steps:

A reference distance $d^R$ is calculated off-line once from a number of data vectors $\{v_i , 0 \leq i \leq I, v_i \in R^N\}$, for example from the totality of learning sets. As the reference distance, the weighted standard deviation of the distances of all vectors from their centre of gravity can be selected.

From the class models $M_{B,0}$ and $M_{B,1}$ a point $\tilde{v}_i$ is calculated that lies on the border between subspaces of class $q=0$ and $q=1$ and that has the smallest distance from $v_k$.

The confidence measure $c_1$ is calculated according to

$$c_1 = \frac{|\widetilde{v}_k - v_k|}{d^R} \tag{4}$$

*Second part $c_2$ of confidence measure*

In the following, an implementation of $c_2$ is shown that is adapted to class models of type A. This measure captures the power of discrimination of the given class models. The idea is to measure the homogeneity of class subspaces. If $v_k$ lies in an inhomogeneous region, the confidence will be low. The confidence measure $c_2$ is calculated as follows:

1) A number $m$ of closest vectors $V^d = \{v_i, 0 \leq i \leq m, v_i \in R^N\}$ with $V^d \in M_{A,0} \cap M_{A,1}$ is chosen such that the vectors $V$ are the $m$ closest ones to $v_k$ lying in a hypersphere of radius $d$ around $v_k$. The distance between a vector $v_i \in V^d$ and $v_k$ can be calculated for example by

$$d = \sum_{n=0}^{N-1} \left( v_{i,n} - v_{k,n} \right)^2 .$$

2) Given that $v_k$ has been classified to class $q$, the confidence measure $c_2$ is calculated according to

$$c_2 = p(d) \text{ with } p(d) = \frac{|V^d \cap M_{A,q}|}{|V^d|} \tag{5}$$

Variations of equation (5) are possible. For example, if $v_k$ belongs to class $q=0$ and $v_0 \in M_{A,0}$ is the closest vector to $v_k$, $V^d$ could be calculated with respect to $v_0$ instead of $v_k$. In this case,

$$c_2 = p(d) \text{ with } d = |v_k - v_0| \tag{6}$$

can be the confidence measure $c_2$ instead.

All proposed confidence measures are not naturally limited to the interval *[0,1]*. For example, $c_2$ in equation (6) is always larger than

$$p(\infty) = \frac{|M_{A,0}|}{|M_{A,0}| + |M_{A,1}|},$$

the a-priori probability of class *q=0*. For this reason, the parameters in equation (1) can be adapted, e.g. $\beta = -p(\infty)$ and $\chi = 1/(1-p(\infty))$.

The forming of the confidence measure value c can be carried out by a linear combination, optionally followed by a clipping operation if a lower limit value or an upper limit value are exceeded.

The first confidence measure part value $c_1$ can be calculated from class models $M_{A,q}$ consisting of representative data vectors, using the following steps:

- evaluating a first distance $d_0$ between the current data item $v_k$ and the representative data vectors of the data class of which the current data item is a member;
- evaluating at least one other distance $d_1$ between the current data item $v_k$ and the representative data vectors of the other data classes;
- calculating a ratio comparing the first distance with the other distance or distances;
- using the ratio as the value for the first confidence measure part value $c_1$.

In this embodiment, in the case that only two data classes exist, the following steps can be carried out:

- the first distance $d_0$ is the distance between the current data item $v_k$ and the closest data vector of the data item member data class;
- the other distance $d_1$ is the distance between the current data item $v_k$ and the closest data vector of the other data class;
- the ratio is the ratio of the difference between the other distance and the first distance to the sum of the other distance and the first distance.

The first confidence measure part value $c_1$ can be calculated from class models $M_{A,q}$ consisting of representative data vectors, using the following steps:

- calculating an average distance $v_k - \dfrac{v_0 + v_1}{2}$ between the current data item $v_k$ and the closest of the representative data vectors $v_0$ and $v_1$, one from each data class;
- calculating a second distance $v_1 - v_0$ between the two data vectors $v_0$ and $v_1$, one from each class model, that are closest to the current data item $v_k$;
- calculating the ratio of the average distance to the second distance;
- using the ratio as the value for the first confidence measure part value $c_1$.

The first confidence measure part value $c_1$ can be calculated from class models $M_{B,q}$ consisting of data vectors defining the limits of the data classes in the data space, using the following steps:

- calculating a mean distance $d^R$ between data vectors using the class model data vectors or other representative data vectors of all data classes;
- calculating a second distance between the current data item $v_k$ and at least one vector from the class models;
- calculating the ratio of the second distance to the mean distance;
- using the ratio as the value for the first confidence measure part value $c_1$.

In this embodiment, the mean distance $d^R$ can be calculated as the mean distance between all class model data vectors and the mean of all class model data vectors, whereby the second distance is the distance between the current data item $v_k$ and the closest vector $\tilde{v}_k$ from the class model of the current data item membership data class.

The second confidence measure part value $c_2$ can be calculated from class models consisting of representative data vectors, using the following steps:

- selecting a set of neighbouring vectors $V^d$ from all data class models in a neighbourhood of the current data item $v_k$;
- calculating the second confidence measure part value $c_2$ from the number of vectors of the neighbouring vectors that belong to the same sample data class as the current data item compared to total number of neighbouring vectors.

In this embodiment, the set of neighbouring vectors can be collected in a hypersphere around the data item $v_k$ such that the resulting vector set has a predetermined relative size, for example 20% of all class model vectors or 20% of another set of vectors.
As an alternative, the set of neighbouring vectors can be collected in a hypersphere around the closest data vector from all class models such that the size of the hypersphere is equal to the distance between the current data item and the closest data vector.
A multimedia asset management system including the inventive apparatus can include means MMDPR that process only those classified multimedia data which have a confidence measure exceeding a given threshold, or that present classified multimedia data ordered by confidence measures.

An interactive image or video browsing system including the inventive apparatus can include means MMDPR that classify images or videos into categories, display some items on a screen, choose other items belonging with highest confidence to the same class as the displayed items, and propose these chosen items to a user.

The invention can also be used in data reduction source coding, where a signal to be compressed is classified into several classes of different signal activity before applying class-adaptive quantifiers. Another example of application are video films on a personal video recorder (PVR) that are clustered into thematic groups such as cinema, sports or documentaries. Another application is recognition of specific signal patterns such as objects or persons in video or images to annotate multimedia databases.

**Claims**

1.  Method for automatically or electronically calculating (MMDCL) confidence measure values (CONFV, $c$) for the correctness or reliability of the assignment of each one of multiple data item samples (UMMD, $v_k$) to a related one of different data classes (CLMS, $q$), **characterised in that** different class models ($M_A$, $M_B$) are determined for at least two different data classes, wherein said method includes the following steps:

    -   calculating for each data item ($v_k$) a first confidence measure part value ($c_1$) that is related to the confidence in classification and that evaluates the distances between the data class-related content of a current data item and the data classes represented by said different class models;
    -   calculating, using said class model, for each data item a second confidence measure part value ($c_2$) that is related to the confidence in said class models and that evaluates for the data class-related content of said current data item ($v_k$) the distribution of data class assignments in the neighbourhood of said current data item;
    -   forming a confidence measure value ($c$) from said first and second confidence measure part values;
    -   assigning to said current data item and its corresponding data class said confidence measure value ($c$).

2.  Method according to claim 1, wherein said data items are video or audio or multimedia data items taken from a bitstream (UMMD).

3.  Method according to claim 1 or 2, wherein said forming of said confidence measure value ($c$) is carried out by a linear combination, optionally followed by a clipping operation if a lower limit value or an upper limit value

4.  Method according to one of claims 1 to 3, wherein said first confidence measure part value ($c_1$) is calculated from class models ($M_{A,q}$) consisting of representative data vectors, using the following steps:

    -   evaluating a first distance ($d_0$) between said current data item ($v_k$) and said representative data vectors of the data class of which said current data item is a member;
    -   evaluating at least one other distance ($d_1$) between said current data item ($v_k$) and said representative data vectors of the other data classes;
    -   calculating a ratio comparing said first distance with said other distance or distances;
    -   using said ratio as said value for said first confidence measure part value ($c_1$).

5.  Method according to claim 4, wherein in the case that only two data classes exist:

    -   said first distance ($d_0$) is the distance between said current data item ($v_k$) and the closest data vector of the data item member data class;
    -   said other distance ($d_1$) is the distance between said current data item ($v_k$) and the closest data vector of the other data class;
    -   said ratio is the ratio of the difference between said other distance and said first distance to the sum of said other distance and said first distance.

6.  Method according to one of claims 1 to 3, wherein said first confidence measure part value ($c_1$) is calculated from class models ($M_{A,q}$) consisting of representative data vectors, using the following steps:

    -   calculating an average distance $v_k - \dfrac{v_0 + v_1}{2}$ between said current data item $v_k$ and the closest of said representative data vectors $v_0$ and $v_1$, one from each data class;

- calculating a second distance $v_1$-$v_0$ between the two data vectors $v_0$ and $v_1$, one from each class model, that are closest to said current data item ($v_k$);
- calculating the ratio of said average distance to said second distance;
- using said ratio as said value for said first confidence measure part value ($c_1$).

**7.** Method according to one of claims 1 to 3, wherein said first confidence measure part value ($c_1$) is calculated from class models ($M_{B,q}$) consisting of data vectors defining the limits of the data classes in the data space, using the following steps:

- calculating a mean distance ($d^R$) between data vectors using said class model data vectors or other representative data vectors of all data classes;
- calculating a second distance between said current data item ($v_k$) and at least one vector from said class models;
- calculating the ratio of said second distance to said mean distance;
- using said ratio as said value for said first confidence measure part value ($c_1$).

**8.** Method according to claim 7, wherein:

- said mean distance ($d^R$) is calculated as the mean distance between all class model data vectors and the mean of all class model data vectors;
- said second distance is the distance between said current data item ($v_k$) and the closest vector ($\tilde{v}_k$) from the class model of the current data item membership data class.

**9.** Method according to one of claims 1 to 8, wherein said second confidence measure part value ($c_2$) is calculated from class models consisting of representative data vectors, using the following steps:

- selecting a set of neighbouring vectors ($V^d$) from all data class models in a neighbourhood of said current data item ($v_k$);
- calculating said second confidence measure part value ($c_2$) from the number of vectors of said neighbouring vectors that belong to the same sample data class as said current data item compared to total number of neighbouring vectors.

**10.** Method according to claim 9, wherein said set of neighbouring vectors is collected in a hypersphere around said data item ($v_k$) such that the resulting vector set has a predetermined relative size, for example 20% of all class model vectors or 20% of another set of vectors.

**11.** Method according to claim 9, wherein said set of neighbouring vectors is collected in a hypersphere around the closest data vector from all class models such that the size of said hypersphere is equal to the distance between said current data item and said closest data vector.

**12.** Apparatus for automatically or electronically calculating confidence measure values (CONFV, $c$) for the correctness or reliability of the assignment of each one of multiple data item samples (UMMD, $v_k$) to a related one of different data classes (CLMS, $q$), **characterised in that** different class models ($M_A$, $M_B$) are determined for at least two different data classes, said apparatus including:

- means (MMDB) for receiving said data item samples;
- means (MMDCL) for calculating for each data item ($v_k$) a first confidence measure part value ($c_1$) that is related to the confidence in classification and that evaluates the distances between the data class-related content of a current data item and the data classes represented by said different class models,
  said means (MMDCL) further calculating, using said class model, for each data item a second confidence measure part value ($c_2$) that is related to the confidence in said class models and that evaluates for the data class-related content of said current data item ($v_k$) the distribution of data class assignments in the neighbourhood of said current data item,
  said means (MMDCL) forming a confidence measure value ($c$) from said first and second confidence measure part values and assigning to said current data item and its corresponding data class said confidence measure value ($c$) ;
- means (MDB) storing a metadata base that includes said data classes (CLMS) and said related confidence measure values ($c$) for said data items.

**13.** Multimedia asset management system including an apparatus according to claim 12, which system includes means (MMDPR) that process only those classified multimedia data which have a confidence measure exceeding a given threshold.

**14.** Multimedia asset management system including an apparatus according to claim 12, which system includes means (MMDPR) that present classified multimedia data ordered by confidence measures.

**15.** Interactive image or video browsing system including an apparatus according to claim 12, which system includes means (MMDPR) that classify images or videos into categories, display some items on a screen, choose other items belonging with highest confidence to the same class as the displayed items, and propose these chosen items to a user.

**Fig.1**

**Fig.2**

**Fig.3**

**European Patent Office**

**EUROPEAN SEARCH REPORT**

Application Number

EP 02 09 0360

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | ARLANDIS J ET AL: "Rejection strategies and confidence measures for a k-NN classifier in an OCR task" PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA,IEEE COMPUT. SOC, US, 11 August 2002 (2002-08-11), pages 576-579, XP010613397 ISBN: 0-7695-1695-X * abstract * * page 576, right-hand column, paragraph 5 - page 577 * --- | 1-15 | G06K9/62 G06T7/40 |
| A | SARANLI AFSAR DEMIREKLER M: "A statistical unified framework for rank-based multiple classifier decision combination" PATTERN RECOGNITION, PERGAMON PRESS INC. ELMSFORD, N.Y, US, vol. 34, no. 4, April 2001 (2001-04), pages 865-884, XP004321310 ISSN: 0031-3203 * figure 1 * --- | 1-15 | |
| T | STAUDER J ET AL: "SEMANTIC IMAGE BROWSING USING HIDDEN CATEGORIES AND CONFIDENCE MEASURES" PROCEEDINGS OF THE SPIE, SPIE, BELLINGHAM, VA, US, vol. 5021, 22 January 2003 (2003-01-22), pages 54-63, XP008018455 * the whole document * ----- | 1-15 | |

**TECHNICAL FIELDS SEARCHED (Int.Cl.7)**

G06K
G06T

The present search report has been drawn up for all claims

| Place of search | Date of completion of the search | Examiner |
|---|---|---|
| THE HAGUE | 27 August 2003 | Granger, B |